# FASCICULE DE BREVET EUROPEEN

(11) **EP 1 893 957 B1**
(45) Date de publication et mention de la délivrance du brevet: **25.01.2012**
(21) Numéro de dépôt: 06777390.3
(22) Date de dépôt: 21.06.2006
(51) Int. Cl.: G01J 3/10, G01N 21/64, G01N 21/01

(54) **CAPTEUR POUR SPECTROMETRE, DONT LES MOYENS OPTIQUES SONT MOBILES, ET SPECTROMETRE CORRESPONDANT**
SPEKTROMETERSENSOR MIT BEWEGLICHER OPTISCHER VORRICHTUNG UND ENTSPRECHENDES SPEKTROMETER
SPECTROMETER SENSOR COMPRISING MOVING OPTICAL MEANS AND CORRESPONDING SPECTROMETER

(30) Priorité: 23.06.2005 FR 0506373
(43) Date de publication de la demande: 05.03.2008
(73) Titulaire: UNIVERSITE DE NANTES, 44035 Nantes Cedex 1 (FR)
(72) Inventeur: ATHALIN, Han, F-44000 Nantes (FR); LEFRANT, Serge, F-44300 Nantes (FR)
(74) Mandataire: Larcher, Dominique
(86) Numéro de dépôt international: PCT/EP2006/063391
(87) Numéro de publication internationale: WO 2006/136576

(56) Documents cités:
- EP-A- 1 489 405
- US-A1- 2003 169 421
- US-B1- 6 289 229

## Description

Le domaine de l'invention est celui de l'instrumentation analytique par voie optique. Plus précisément, l'invention concerne un capteur actif, pour la spectroscopie à effets complexes et notamment, la spectrométrie Raman et la spectrométrie fluorescence.

Dans le domaine de l'invention, différents types de capteurs à fibre optique sont utilisés pour la spectrométrie Raman et la spectrométrie fluorescence.

Leur caractéristique commune est de recevoir une lumière excitatrice externe, tel qu'un faisceau laser provenant d'un spectromètre par exemple par une fibre optique, pour l'acheminer sur l'échantillon à analyser. Le capteur reçoit ensuite la lumière diffusée par l'échantillon à analyser sur le même point focal fixe d'où la lumière excitatrice est sortie de ce capteur, puis retourne cette lumière diffusée par l'échantillon vers le spectromètre au moyen d'une deuxième fibre optique.

Classiquement, les capteurs comportent plusieurs éléments optiques, tels que des lentilles, miroirs, filtres, fibres optiques.

Or, actuellement, les capteurs sont dits uni-axe. En d'autres termes, les éléments optiques sont fixes, ce qui implique un point unique et fixe, se trouvant soit perpendiculairement soit parallèlement à l'axe du capteur. Ceci limite l'utilisation des capteurs en fonction de l'emplacement de ce point focal.

En effet, dans certaines conditions, il est souhaitable de pouvoir modifier la position du point focal. Ceci n'est possible avec les capteurs connus qu'en modifiant la position du capteur dans son ensemble (ce qui entraîne des temps de réglage relativement importants) ou encore en ayant recours à deux capteurs différents (ce qui bien entendu tend à augmenter considérablement le coût du dispositif).

Par ailleurs, chaque spectromètre doit également posséder sa propre source d'excitation lumineuse qui lui est intégrée ou utiliser une source d'excitation lumineuse externe se trouvant à proximité de ce spectromètre.

Ceci s'avère peu pratique en termes d'installation.

De plus, ces spectromètres sont généralement limités à une unique longueur d'onde pour la source d'excitation lumineuse.

L'invention a notamment pour objectif de pallier les inconvénients de l'art antérieur.

Plus précisément, l'invention a pour objectif de proposer un capteur pour spectromètre qui ne soit pas limité à un point focal fixe.

L'invention a aussi pour objectif de fournir un tel capteur qui assure le même niveau de fiabilité en termes de réglages que les solutions de l'art antérieur.

L'invention a aussi pour objectif de fournir un tel capteur qui permette de modifier le point focal par des manipulations simples et rapides.

Un autre objectif de l'invention est de fournir un tel capteur qui permette d'optimiser l'ergonomie des spectromètres en termes d'implantation de source lumineuse.

Encore un autre objectif de l'invention est de fournir un tel capteur qui permette de réduire les coûts d'équipement en matériel.

Encore un autre objectif de l'invention est de fournir un tel capteur qui puisse être fabriqué selon une configuration compacte.

L'invention a encore pour objectif de fournir un tel capteur qui soit simple de conception et facile à mettre en oeuvre.

Ces objectifs ainsi que d'autres qui apparaîtront par la suite sont atteints grâce aux caractéristiques de la revendication 1.

Ainsi, le capteur selon l'invention intègre une partie optique mobile dont l'agencement permet, par simple changement de position, la sélection rapide et facile de différentes positions possibles pour l'axe focal.

Ceci permet, lors d'une analyse, de pouvoir changer la direction du point focal du capteur sans changer le capteur de position et sans changer de capteur.

Par exemple, lorsque l'espace dans lequel l'analyse doit être effectuée est trop exigu pour permettre au capteur d'être orienté dans plusieurs directions, telles qu'à l'intérieur d'une cuve de laboratoire opaque ou d'un tuyau opaque, le capteur selon l'invention permet d'effectuer des analyses dans plusieurs directions.

Tel que déjà mentionné, ceci ne serait possible, avec les capteurs de l'art antérieur qu'en utilisant deux capteurs différents, l'un par exemple avec l'axe focal parallèle à l'axe du capteur et l'autre avec un axe focal perpendiculaire à l'axe du capteur.

Selon un autre exemple, le capteur selon l'invention permet d'analyser dans un creuset étroit, en laboratoire ou sur site hasardeux, aussi bien les résidus déposés sur les parois latérales du creuset que la matière se trouvant au fond de ce creuset, avec un seul et même capteur.

On comprend donc que l'invention permet de réduire les coûts d'équipement en matériel d'instrumentation analytique.

Selon une solution préférée, lesdits moyens optiques sont mobiles entre au moins deux positions :
- une position selon laquelle l'axe dudit faisceau cible et l'axe dudit faisceau source sont confondus ou parallèles ;
- une position selon laquelle l'axe dudit faisceau cible est sensiblement perpendiculaire à l'axe dudit faisceau source.

Un tel agencement permet d'obtenir, à partir d'un même faisceau source, un point focal bi-directionnel, ce qui offre des possibilités correspondant aux besoins les plus fréquents.

Selon un mode de réalisation préférentiel, lesdits moyens optiques mobiles comprennent au moins trois lentilles disposées de façon que deux desdites lentilles présente un même premier axe focal, la troisième desdites lentilles présentant un deuxième axe focal formant un angle de 90° avec ledit premier axe focal.

On obtient de cette façon une solution simple de conception et facile à mettre en oeuvre pour réaliser un capteur à point focal bi-directionnel.

Avantageusement, lesdites trois lentilles sont portées par un anneau rotatif.

Dans ce cas, lesdits moyens optiques intègrent avantageusement une séparation de faisceau montée préférentiellement à l'intérieur dudit anneau.

Ainsi, les moyens optiques peuvent être intégrés au capteur en présentant un encombrement relativement faible.

Préférentiellement, il comprend des moyens de maintien en position desdits moyens optiques mobiles.

De cette façon, on assure la fixité des moyens optiques une fois ceux-ci orientés pour atteindre un point focal déterminée, ce qui évite tout risque de déréglage en cours d'analyse.

Dans ce cas, lesdits moyens optiques comprennent préférentiellement une unité mobile associée à des moyens de rappel élastique qui tendent à appuyer ladite unité contre lesdits moyens optique mobiles.

Selon une autre caractéristique, il comprend au moins un voyant témoin destiné à fournir une indication de l'état de fonctionnement dudit faisceau source.

Dans ce cas, ledit voyant témoin est avantageusement monté sur ledit anneau, diamétralement opposé à ladite troisième lentille, au moins un orifice étant ménagé dans ledit anneau pour permettre le passage d'une lumière en provenance dudit faisceau source en direction dudit voyant témoin.

Ainsi, le faisceau source est dans l'alignement du voyant témoin en vue d'éclairer celui-ci efficacement, ceci de façon très simple et donc peut coûteuse.

Préférentiellement, ledit voyant témoin se présente sous la forme d'une pièce en saillie dudit anneau de façon à former un moyen de préhension.

Le voyant témoin a ainsi une double fonction : celle consistant à témoigner du fonctionnement de la source d'excitation lumineuse et celle consistant à former un moyen de préhension pour la sélection de la position de l'axe focal.

Selon un autre aspect de l'invention, le capteur comprend une enveloppe délimitant un volume fonctionnel et intègre, au sein dudit volume fonctionnel, au moins une source d'excitation lumineuse.

Un tel capteur permet d'envisager des gains en termes de temps de mise en service et d'exploitation du spectromètre. En effet, la mise en place du capteur sur le spectromètre évite de devoir associer celui-ci à une source externe d'excitation lumineuse.

De plus, si un tel capteur est associé à un spectromètre qui intègre sa propre source d'excitation lumineuse, le capteur peut apporter au spectromètre une nouvelle source d'excitation lumineuse avec une longueur d'onde différente.

Préférentiellement, ladite source d'excitation lumineuse comprend un laser à diode.

Selon une solution avantageuse, le capteur intègre également, au sein dudit volume fonctionnel, des moyens de contrôle de ladite source d'excitation lumineuse

On place ainsi les moyens de contrôle à proximité immédiate de la source d'excitation lumineuse, ce qui permet des gains en termes de compacité du spectromètre ainsi qu'en termes de connectique.

Avantageusement, le capteur intègre également, au sein dudit volume fonctionnel, une source d'énergie destinée à alimenter ladite source d'excitation lumineuse.

Préférentiellement, le capteur intègre également, au sein dudit volume fonctionnel, des moyens de ventilation, une grille d'aération étant prévue dans ladite enveloppe.

Avantageusement, le capteur intègre également, au sein dudit volume fonctionnel, une unité de refroidissement de ladite source d'excitation lumineuse, ladite unité de refroidissement étant contrôlée par lesdits moyens de contrôle.

De cette façon, les différents organes essentiels au fonctionnement de la source d'excitation lumineuse sont regroupés au sein du capteur.

Selon une solution préférée, ledit capteur comprend une enveloppe comprenant une partie amovible permettant un accès audit volume fonctionnel délimité par ladite enveloppe.

Il est ainsi possible d'ouvrir aisément et rapidement le capteur, en vue notamment d'effectuer une opération de maintenance à l'intérieur de celui-ci.

L'invention concerne également un capteur, comprenant des moyens optiques sur lesquels est acheminé un faisceau source de lumière excitatrice et à partir desquels est émis un faisceau cible vers un échantillon à analyser, caractérisé en ce que lesdits moyens optiques dudit capteur sont mobiles de façon à permettre de faire varier la direction dudit faisceau cible.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont chacune une vue schématique en coupe d'une partie optique mobile d'un capteur selon l'invention, respectivement dans une position où l'axe focal est parallèle à l'axe du capteur et dans une position où l'axe focal est perpendiculaire à l'axe du capteur ;
- la figure 3 est un schéma expliquant la séparation du faisceau excitateur et du faisceau provenant de l'échantillon à analyser lors de leur passage à travers le séparateur de faisceau se trouvant au centre de la partie optique rotative.
- la figure 4 est une vue schématique en coupe d'une unité auto-bloquante destiné à maintenir les moyens optiques mobiles en position.
- la figure 5 est une vue schématique en coupe d'un voyant témoin indiquant le fonctionnement de la source d'excitation lumineuse.
- la figure 6 est une vue schématique en coupe des moyens optiques mobiles et de la partie réceptrice à fibre optique permettant le retour de la lumière diffusée par l'échantillon à analyser vers le spectromètre.
- la figure 7 est une schématique vue en coupe des moyens optiques mobiles et de la partie réceptrice à fibre optique permettant le retour de la lumière diffusée par l'échantillon à analyser vers le spectromètre, selon une variante de réalisation.
- la figure 8 est une vue schématique en coupe de l'ensemble du capteur dans la position où l'axe focal est perpendiculaire à l'axe du capteur.
- la figure 9 est une vue schématique en coupe de l'ensemble du capteur dans la position où l'axe focal est parallèle à l'axe du capteur.

Tel que mentionné précédemment, le principe de l'invention réside dans le fait d'équiper un capteur pour spectromètre de moyens optiques mobiles permettant de faire varier la direction d'un faisceau cible.

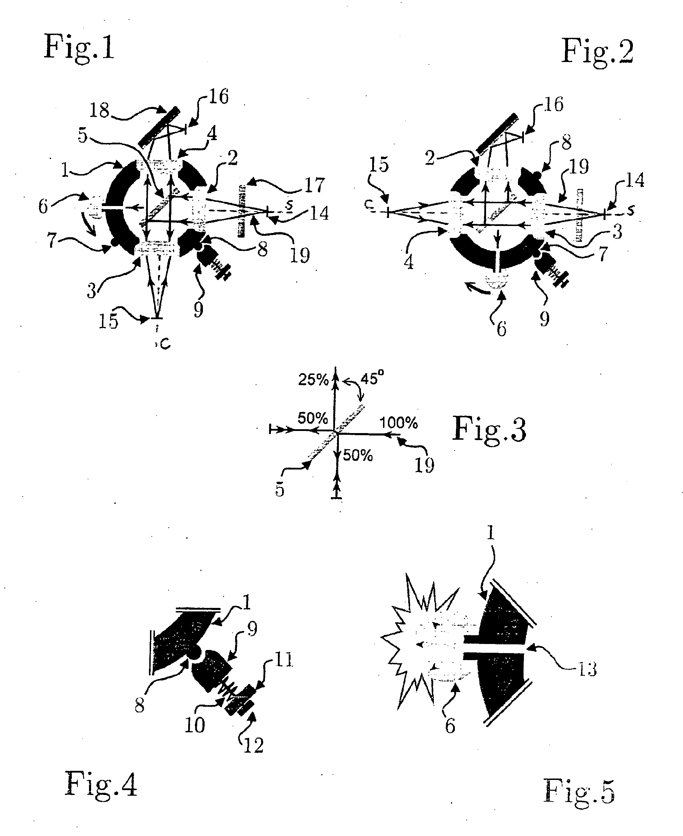

Les figues 1 et 2 illustrent un mode de réalisation préférentiel de l'invention selon lequel les moyens optiques sont mobiles entre deux positions :
- une position selon laquelle l'axe (S) du faisceau source et l'axe (C) du faisceau cible sont perpendiculaires (figure 1) ;
- une position selon laquelle l'axe (S) du faisceau source et l'axe (C) du faisceau cible sont confondus (figure 2).

Les moyens optiques mobiles comprennent :
- un anneau 1 monté rotatif sur une partie fixe du capteur et dans lequel sont insérées trois lentilles 2, 3, 4 ;
- un séparateur de faisceau 5 ;
- un bouton témoin 6 ;
- une unité auto-bloquante 9.

Selon le présent mode de réalisation, les trois lentilles 2, 3 et 4 sont de type plan-convexe et sont insérées dans l'anneau 1, les lentilles 3, 4 étant montées, diamétralement opposées sur l'anneau 1, la lentille 2 étant montée sur l'anneau perpendiculairement aux lentilles 3, 4.

L'anneau 1 est réalisé en une matière solide et légère telle que de l'aluminium par exemple dans lequel trois cavités ont été préformées à cet effet.

Comme cela apparaît clairement, le séparateur de faisceau est monté au centre de l'anneau rotatif.

Par ailleurs, un bouton témoin 6 de préférence de forme sphérique, opaque, en plastique dur par exemple, est prévu pour apparaître en saillie à la périphérie de l'anneau 1 de façon à servir à la fois de manette pour la sélection de la position de l'axe focal et de voyant témoin pour le fonctionnement de la source d'excitation lumineuse.

La fonction « voyant témoin » s'exerce de la façon suivante.

Lorsque la source d'excitation lumineuse est en fonctionnement, la lumière qu'elle émet passe par l'orifice 13 (diamétralement opposé à la lentille 2), et illumine ainsi le bouton témoin 6, comme détaillé sur la figure 5.

En référence à la figure 4, l'unité auto-bloquante 9 est pourvue d'une tige sur laquelle sont enfilés un ressort 10, une rondelle 11 fixée sur le corps du capteur et une rondelle 12 limitant la pression de l'unité auto-bloquante 9 sur le système de lentilles. L'action du ressort tend à appuyer l'unité 9 contre la butée 8 (ou sur la butée 7). Les butées 7 et 8 maintiennent les moyens optiques mobiles dans une position prédéterminée, c'est-à-dire, dans le cas représenté aux figures 1 et 2, soit avec l'axe focal parallèle à l'axe du capteur comme représenté dans la figure 1, soit avec l'axe focal perpendiculaire à l'axe du capteur comme représenté dans la figure 2.

On note que les points 14, 15 et 16 sont des points focaux virtuels symétriques provenant, pour le point focal 14, de la source d'excitation lumineuse et pour le point focal 15, de l'échantillon à analyser. Le point 16 est un point focal image.

La figure 3 détaille la séparation du faisceau source et du faisceau provenant de l'échantillon à analyser lorsque ces faisceaux traversent le séparateur de faisceau 5.

A titre indicatif, le séparateur 5 est un séparateur de faisceau 50:50.

En outre, un filtre à bande passante 17 se situe après le point focal virtuel 14 pour éliminer les raies parasites et la fluorescence de la source d'excitation lumineuse dont le faisceau 19 pénètre dans les moyens optiques mobiles au point 20 après avoir traversé le filtre à bande passante 17. Un miroir 18 dévie le faisceau lumineux retour provenant de l'échantillon à analyser vers la partie réceptrice à fibre optique.

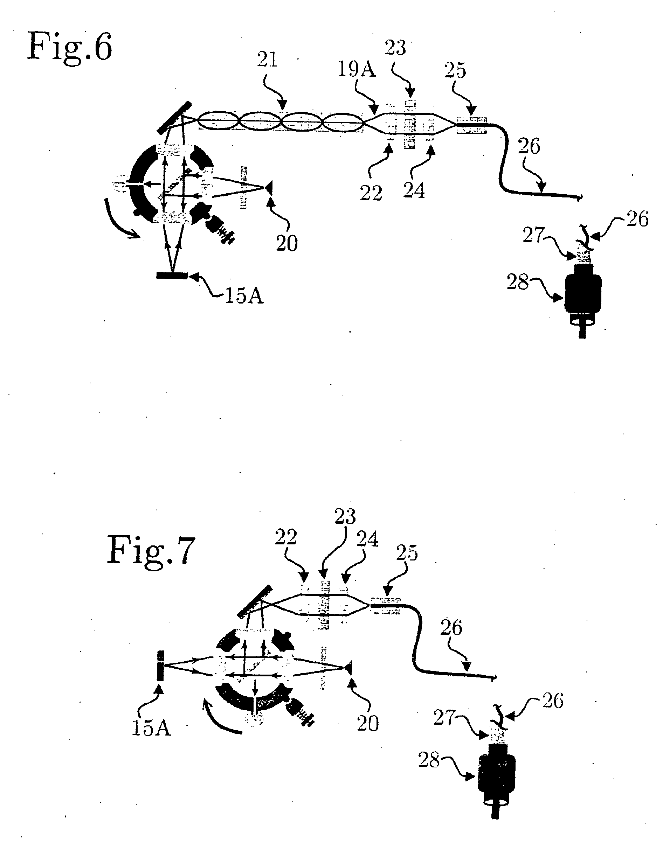

La partie réceptrice à fibre optique représentée sur la figure 6, est composée d'éléments passifs optiques tels qu'un guide optique 21, à titre d'exemple un guide optique Selfoc (marque déposée), et de deux lentilles 22 et 24, de type plan-convexe par exemple créant une géométrie finie/finie et un filtre Notch 23 entre les deux lentilles 22 et 24.

Le faisceau 19A, qui provient de l'échantillon à analyser 15A placé au point focal 15, est dirigé par l'embout de fibre optique 25 à l'intérieur de la fibre optique 26 qui envoie ce faisceau lumineux vers un spectromètre extérieur capable d'analyser l'effet Raman ou la fluorescence.

La fibre optique 26 est protégée par une gaine 27 et connectée au spectromètre extérieur par un connecteur 28. Le guide optique 21 sert à prolonger la distance entre le point focal 16 et la lentille 22 mais peut également, dans un autre mode de réalisation possible, être omis, comme représenté sur la figure 7.

Selon un autre aspect de l'invention, le capteur comprend une enveloppe délimitant un volume fonctionnel intégrant une source d'excitation lumineuse.

Selon le présent mode de réalisation, la source d'excitation lumineuse est un laser à diode 32, alimenté par une source énergétique 35, une batterie lithium-ion par exemple.

La source énergétique est connectée à une unité contrôleur de laser 33 par un connecteur 34. L'unité contrôleur de laser 33 contrôle à la fois l'unité de refroidissement par effet Peltier 32A qui est couplée au laser à diode 32, ainsi qu'à un ventilateur miniature 39.

Le ventilateur miniature 39 est connecté à l'unité contrôler de laser 33 par un câble 40. Une grille d'aération 39A, intégrée dans l'enveloppe extérieure du capteur 29, permet une évacuation de la chaleur produite par le laser vers l'extérieur du capteur grâce à l'action du ventilateur 39.

La mise sous et hors tension de la source d'excitation lumineuse est effectuée par un interrupteur 36 muni par exemple d'un bouton 37 et connecté à l'unité contrôleur de laser 33 par un câble 38.

A titre indicatif, un tel capteur présente extérieurement, sous la forme d'un cylindre d'un diamètre d'environ 4 cm et d'une longueur d'environ 10 cm, pour un poids d'environ 150 grammes.

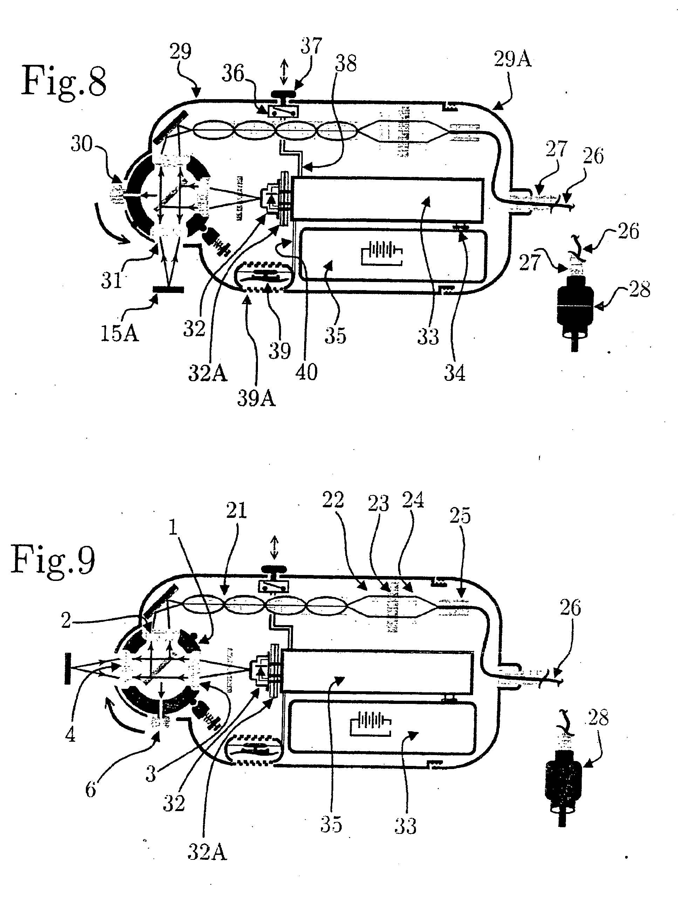

L'ensemble du capteur, représenté sur les figures 8 et 9, est protégé par une enveloppe extérieure en deux parties 29 et 29A délimitant ensemble un volume fonctionnel.

Cette enveloppe est réalisée en une matière solide et légère telle que l'aluminium par exemple, de forme cylindrique de préférence. Cette enveloppe extérieure se scinde en deux pour permettre l'ouverture du capteur afin d'effectuer le remplacement de la source énergétique 35 lorsque celle-ci est usée ou doit être rechargée. La partie amovible de l'enveloppe extérieure est la partie 29A, qui peut se visser ou s'emboîter par exemple sur la partie 29.

Le faisceau lumineux provenant de la source d'excitation lumineuse 32 sort du capteur par l'orifice 30 lorsque le capteur est en position où l'axe focal est parallèle à l'axe du capteur, ou par l'orifice 31 lorsque le capteur est en positon où l'axe focal est perpendiculaire à l'axe du capteur. Ces deux positions possibles de l'axe focal sont sélectionnées par l'opérateur au moyen du bouton témoin 6 afin d'adapter le capteur à l'emplacement de l'échantillon à analyser 15A.

La source d'excitation lumineuse peut également, dans un autre mode de réalisation possible du capteur, être omise. Dans ce cas, la partie source d'excitation lumineuse est remplacée par une fibre optique qui amène le faisceau lumineux provenant d'une source d'excitation lumineuse extérieure au capteur, celle d'un spectromètre par exemple, vers la partie rotative du capteur jusqu'au point 20. La gaine 27 protège alors deux fibre optiques, qui sont la fibre optique conduisant le faisceau excitateur et la fibre optique conduisant le faisceau retour provenant de l'échantillon à analyser.

Le fonctionnement du capteur selon l'invention est le suivant.

Lorsque le capteur selon l'invention est utilisé par un opérateur pour l'analyse d'un échantillon, une lumière monochromatique aller, provenant de la source d'excitation lumineuse logée dans le capteur, en l'occurrence un laser à diode, traverse le filtre à bande passante qui élimine la fluorescence et rend le faisceau monochromatique et plus étroit.

Ce faisceau excitateur atteint les moyens optiques mobiles du capteur. Il traverse d'abord une première lentille qui le rend parallèle et l'envoie sur le séparateur de faisceau.

Ce séparateur de faisceau divise le faisceau en changeant son axe et l'envoie sur une deuxième lentille qui le focalise vers l'extérieur du capteur sur l'échantillon à analyser. Selon le premier mode de réalisation selon lequel les moyens optiques sont mobiles entre deux positions, une lentille fait sortir le faisceau excitateur parallèlement à l'axe du capteur, et l'autre lentille fait sortir le faisceau excitateur perpendiculairement à l'axe du capteur.

La position des moyens optiques mobiles est sélectionnée aisément et rapidement par l'opérateur en déplaçant le bouton témoin prévu à cet effet vers l'une de ses deux positions possibles. La position choisie est fixée au moyen de l'unité-autobloquante qui s'emboîte sur l'une des deux butées situées sur la partie optique rotative.

Le bouton témoin, opaque, permet également à l'opérateur de vérifier le bon fonctionnement de la lumière excitatrice qui illumine, lorsqu'elle est en fonctionnement, le voyant de l'intérieur, le rendant luminescent.

La réponse de l'échantillon à analyser à l'excitation lumineuse provenant du capteur est une lumière diffusée de retour qui pénètre dans le capteur par la même lentille d'où le faisceau excitateur est sorti. Le faisceau retour atteint le séparateur de lumière qui le redresse et l'envoie sur une lentille qui le focalise, puis sur un miroir qui le réfléchit sur la partie réceptrice à fibre optique.

Cette partie réceptrice à fibre optique est constituée :
- d'un guide optique qui prolonge la distance focale ;
- d'une première lentille qui rend le faisceau parallèle ;
- d'un filtre Notch qui élimine la diffusion Rayleigh ;
- d'une deuxième lentille qui focalise le faisceau dans la fibre optique qui l'amènera jusqu'au spectromètre en vue d'en effectuer l'analyse.

Bien entendu, l'invention n'est nullement limitée aux modes de réalisation décrits et représentés qui n'ont été donnés qu'à titre d'exemple non limitatifs. Par exemple, selon un autre mode de réalisation possible, le capteur selon l'invention peut ne pas intégrer de source d'excitation lumineuse, auquel cas il faudra utiliser une source d'excitation lumineuse externe, provenant d'un spectromètre par exemple, et peut également ne pas comprendre de guide optique.

## Revendications

1. Capteur pour spectromètre, comprenant des moyens optiques (1-9) sur lesquels est acheminé un faisceau source de lumière excitatrice et à partir desquels est émis un faisceau cible vers un échantillon à analyser,
**caractérisé en ce que** lesdits moyens optiques sont mobiles de façon à permettre de faire varier la direction dudit faisceau cible, lesdits moyens optiques étant mobiles entre au moins deux positions :
- une position selon laquelle l'axe dudit faisceau cible et l'axe dudit faisceau source sont confondus ou parallèles ;
- une position selon laquelle l'axe dudit faisceau cible est sensiblement perpendiculaire à l'axe dudit faisceau source,
lesdits moyens optiques mobiles comprenant au moins trois lentilles (2,3,4) disposées de façon que deux desdites (3,4) lentilles présentent un même premier axe focal, la troisième desdites lentilles (2) présentant un deuxième axe focal formant un angle de 90° avec ledit premier axe focal, lesdites trois lentilles étant portées par un anneau rotatif (1), lesdits moyens optiques intégrant un séparateur de faisceau (5) monté à l'intérieur dudit anneau (1).

2. Capteur pour spectromètre selon l'une quelconque des revendications 1, **caractérisé en ce qu'**il comprend des moyens de maintien en position desdits moyens optiques mobiles.

3. Capteur pour spectromètre selon la revendication 1, **caractérisé en ce que** lesdits moyens de maintien en position comprennent au moins une unité mobile associée à des moyens de rappel élastique (8-12) qui tendent à appuyer ladite unité contre lesdits moyens optique mobiles.

4. Capteur pour spectromètre selon l'une quelconque des revendications 1 et 2, **caractérisé en ce qu'**il comprend au moins un voyant témoin (6) destiné à fournir une indication de l'état de fonctionnement dudit faisceau source.

5. Capteur pour spectromètre selon la revendication 4, **caractérisé en ce que** ledit voyant témoin (6) est monté sur ledit anneau (1), diamétralement opposé à ladite troisième lentille, au moins un orifice (13) éant ménagé dans ledit anneau pour permettre le passage d'une lumière en provenance dudit faisceau source en direction dudit voyant témoin.

6. Capteur pour spectromètre selon la revendication 4, **caractérisé en ce que** ledit voyant témoin (6) se présente sous la forme d'une pièce en saillie dudit anneau de façon à former un moyen de préhension.

7. Capteur pour spectromètre selon l'une quelconque des revendications 1 à 6, comprenant une enveloppe délimitant un volume fonctionnel, **caractérisé en ce qu'**il intègre, au sein dudit volume fonctionnel, au moins une source d'excitation lumineuse (32).

8. Capteur pour spectromètre selon la revendication 7, **caractérisé en ce que** ladite source d'excitation lumineuse (32) comprend un laser à diode.

9. Capteur pour spectromètre selon l'une des revendications 7 et 8, **caractérisé en ce qu'**il intègre également, au sein dudit volume fonctionnel, des moyens de contrôle (33) de ladite source d'excitation lumineuse.

10. Capteur pour spectromètre selon l'une des revendications 7 et 9, **caractérisé en ce qu'**il intègre également, au sein dudit volume fonctionnel, une source d'énergie (35) destinée à alimenter ladite source d'excitation lumineuse.

11. Capteur pour spectromètre selon l'une quelconque des revendications 7 à 10, **caractérisé en ce qu'**il intègre également, au sein dudit volume fonctionnel, des moyens de ventilation (39), une grille d'aération (32A) étant prévue dans ladite enveloppe.

12. Capteur pour spectromètre selon l'une quelconque des revendications 9 à 11, **caractérisé en ce qu'**il intègre également, au sein dudit volume fonctionnel, une unité de refroidissement de ladite source d'excitation lumineuse, ladite unité de refroidissement (32A) étant contrôlée par lesdits moyens de contrôle.

13. Capteur pour spectromètre selon l'une quelconque des revendications 1 à 12, **caractérisé en ce que** ledit capteur comprend une enveloppe comprenant une partie amovible (29A) permettant un accès audit volume fonctionnel délimité par ladite enveloppe.

14. Spectromètre intégrant le capteur, de la revendication 1.

## Claims

1. Spectrometer sensor, comprising optical means (1-9) onto which an excitation light source beam is delivered and from which a target beam is emitted towards a sample to be analysed,
**characterised in that** the said optical means are movable so as to make it possible to vary the direction of the said target beam, the said optical means being movable between two positions:
- a position in which the axis of the said target beam and the axis of the said source beam coincide or are parallel;
- a position in which the axis of the said target beam is substantially perpendicular to the axis of the said source beam,
the said movable optical means comprising at least three lenses (2, 3, 4) arranged so that two of the said lenses (3, 4) have an identical first focal axis, the third of the said lenses (2) having a second focal axis making an angle of 90° with the said first focal axis, the said three lenses being carried by a rotary ring (1), the said optical means comprising a beam splitter (5) mounted inside the said ring (1).

2. Spectrometer sensor according to Claim 1, **characterised in that** it comprises means for holding the said movable optical means in position.

3. Spectrometer sensor according to Claim 1, **characterised in that** the said means for holding in position comprise at least one movable unit associated with resilient restoring means (8-12) which tend to press the said unit against the said movable optical means.

4. Spectrometer sensor according to either of Claims 1 and 2, **characterised in that** it comprises at least one luminous indicator (6) intended to provide an indication of the state of operation of the said source beam.

5. Spectrometer sensor according to Claim 4, **characterised in that** the said luminous indicator (6) is mounted on the said ring (1), diametrically opposite the said third lens, at least one orifice (13) being formed in the said ring in order to allow light coming from the said source beam to pass through in the direction of the said luminous indicator.

6. Spectrometer sensor according to Claim 4, **characterised in that** the said luminous indicator (6) is in the form of a piece projecting from the said ring so as to form a gripping means.

7. Spectrometer sensor according to any one of Claims 1 to 6, comprising a casing delimiting a functional volume, **characterised in that** it comprises at least one excitation light source (32) inside the said functional volume.

8. Spectrometer sensor according to Claim 7, **characterised in that** the said excitation light source (32) comprises a diode laser.

9. Spectrometer sensor according to one of Claims 7 and 8, **characterised in that** it also comprises means (33) inside the said functional volume for controlling the said excitation light source.

10. Spectrometer sensor according to one of Claims 7 and 9, **characterised in that** it also comprises an energy source (35) inside the said functional volume, which is intended to power the said excitation light source.

11. Spectrometer sensor according to any one of Claims 7 to 10, **characterised in that** it also comprises ventilation means (39) inside the said functional volume, an aeration grille (39A) being provided in the said casing.

12. Spectrometer sensor according to any one of Claims 9 to 11, **characterised in that** it also comprises a unit inside the said functional volume for cooling the said excitation light source, the said cooling unit (32A) being controlled by the said control means.

13. Spectrometer sensor according to any one of Claims 1 to 12, **characterised in that** the said sensor comprises a casing comprising a removable part (29A) allowing access to the said functional volume delimited by the said casing.

14. Spectrometer comprising the sensor of Claim 1.

## Patentansprüche

1. Spektrometersensor mit optischen Mitteln (1-9), auf die ein anregender Quellenlichtstrahl gelenkt wird und von denen aus ein Zielstrahl zu einer zu analysierenden Probe gesendet wird,
**dadurch gekennzeichnet, dass** die optischen Mittel beweglich sind, so dass die Richtung des Zielstrahls verändert werden kann, wobei die optischen Mittel zwischen mindestens zwei Positionen beweglich sind:
- einer Position, in der die Achse des Zielstrahls und die Achse des Quellenstrahls deckungsgleich sind oder parallel zueinander verlaufen;
- einer Position, in der die Achse des Zielstrahls im Wesentlichen senkrecht zur Achse des Quellenstrahls verläuft,
wobei die beweglichen optischen Mittel mindestens drei Linsen (2,3,4) umfassen, die so angeordnet sind, dass zwei der Linsen (3,4) dieselbe erste Brennachse aufweisen, während die dritte der Linsen (2) eine zweite Brennachse aufweist, die einen Winkel von 90° zur ersten Brennachse bildet, wobei die drei Linsen von einem Drehring (1) getragen werden, wobei die optischen Mittel einen innerhalb des Rings (1) befestigten Strahlseparator (5) beinhalten.

2. Spektrometersensor nach Anspruch 1, **dadurch gekennzeichnet, dass** er Mittel zur Aufrechterhaltung der Position der beweglichen optischen Mittel umfasst.

3. Spektrometersensor nach Anspruch 1, **dadurch gekennzeichnet, dass** die Mittel zur Aufrechterhaltung der Position mindestens eine bewegliche Einheit umfassen, die mit federnden Rückstellmitteln (8-12) verbunden ist, die darauf abzielen, die Einheit an die beweglichen optischen Mittel anzudrücken.

4. Spektrometersensor nach einem beliebigen der Ansprüche 1 und 2, **dadurch gekennzeichnet, dass** er mindestens eine Kontrollanzeige (6) umfasst, die dazu dient, den Betriebszustand des Quellenstrahls anzuzeigen.

5. Spektrometersensor nach Anspruch 4, **dadurch gekennzeichnet, dass** die Kontrollanzeige (6) an dem Ring (1) diametral gegenüber der dritten Linse befestigt ist, wobei mindestens eine Bohrung (13) in dem Ring ausgebildet ist, um den Durchgang eines vom Quellenstrahl kommenden Lichts zur Kontrollanzeige zu ermöglichen.

6. Spektrometersensor nach Anspruch 4, **dadurch gekennzeichnet, dass** die Kontrollanzeige (6) in Form eines Teils vorliegt, das über den Ring übersteht, so dass es ein Greifmittel bildet.

7. Spektrometersensor nach einem beliebigen der Ansprüche 1 bis 6 mit einem Gehäuse, das einen funktionellen Raum begrenzt, **dadurch gekennzeichnet, dass** er innerhalb des funktionellen Raums mindestens eine Anregungslichtquelle (32) beinhaltet.

8. Spektrometersensor nach Anspruch 7, **dadurch gekennzeichnet, dass** die Anregungslichtquelle (32) einen Diodenlaser umfasst.

9. Spektrometersensor nach einem der Ansprüche 7 und 8, **dadurch gekennzeichnet, dass** er in dem funktionellen Raum außerdem Mittel zur Steuerung (33) der Anregungslichtquelle beinhaltet.

10. Spektrometersensor nach einem der Ansprüche 7 und 9, **dadurch gekennzeichnet, dass** er in dem funktionellen Raum außerdem eine Energiequelle (35) zur Versorgung der Anregungslichtquelle beinhaltet.

11. Spektrometersensor nach einem beliebigen der Ansprüche 7 bis 10, **dadurch gekennzeichnet, dass** er in dem funktionellen Raum außerdem Belüftungsmittel (34) beinhaltet, wobei in dem Gehäuse ein Lüftungsgitter (39A) vorgesehen ist.

12. Spektrometersensor nach einem beliebigen der Ansprüche 9 bis 11, **dadurch gekennzeichnet, dass** er in dem funktionellen Raum außerdem eine Einheit zur Kühlung der Anregungslichtquelle beinhaltet, wobei die Kühleinheit (32A) von den Steuerungsmitteln gesteuert wird.

13. Spektrometersensor nach einem beliebigen der Ansprüche 1 bis 12, **dadurch gekennzeichnet, dass** der Sensor ein Gehäuse umfasst, das ein abnehmbares Teil (29A) umfasst, welches den Zugang zu dem durch das Gehäuse begrenzten funktionellen Raum ermöglicht.

14. Spektrometer mit dem Sensor aus Anspruch 1.
